# EUROPEAN PATENT APPLICATION

(11) **EP 4 524 759 A1**
(43) Date of publication of application: **19.03.2025**
(21) Application number: 24164187.7
(22) Date of filing: 18.03.2024
(51) Int. Cl.: G06F 13/42

(54) **STORAGE DEVICE AND ELECTRONIC SYSTEM**

(30) Priority: 14.09.2023 KR 20230122464
(71) Applicant: Samsung Electronics Co., Ltd., Suwon-si, Gyeonggi-do 16677 (KR)
(72) Inventor: LEE, Ganggyu, 16677 Suwon-si, Gyeonggi-do (KR)
(74) Representative: Kuhnen & Wacker Patent- und Rechtsanwaltsbüro PartG mbB

(57) **Abstract**

A storage device 300 is provided. The storage device 300 includes: a memory 320 configured to store first protocol data and first link data corresponding to a first host 100; and a switch 310 connected to the memory 320, and configured to: read the first protocol data from the memory 320 based on second protocol data being received from the first host 100, and perform a link-up process with the first host 100 by using the first link data based on the first protocol data matching the second protocol data.

## Description

### BACKGROUND

### 1. Field

The present disclosure relates to a storage device and an electronic system.

### 2. Description of Related Art

A semiconductor device includes interfaces for transmitting and receiving data to and from other semiconductor devices, and the interfaces may be implemented according to various specifications. For example, among the interfaces that connect semiconductor devices to each other, the PCI Express (PCIe) interface has been applied in various fields for high-speed data transmission. A PCIe interface is an interface in the form of a serial transmission, and is defined by the PCIe specification, and provides a bidirectional connection that can simultaneously transmit and receive data.

In this way, in order for semiconductor devices to exchange data with each other through an interface, processes such as establishing a link at the physical layer of the interface and selecting the values of parameters that can be set at the physical layer may need to be executed.

### SUMMARY

One or more embodiments provide a storage device and an electronic system that support a plurality of hosts and quickly establish a link.

According to an aspect of an embodiment, a storage device includes: a memory configured to store first protocol data and first link data corresponding to a first host; and a switch connected to the memory, and configured to: read the first protocol data from the memory based on second protocol data being received from the first host, and perform a link-up process with the first host by using the first link data based on the first protocol data matching the second protocol data.

According to another aspect of an embodiment, a storage device includes: a non-volatile memory configured to store first protocol data and first link data corresponding to a first host in a switch region; a switch connected with the first host, and configured to, based on second protocol data being received from the first host, determine whether the first protocol data and the second protocol data match, and, based on determining the first protocol data and the second protocol data match, perform a link-up process by using the first link data to establish a link with the first host; and a controller configured to receive a packet from the first host over the link, and perform a data operation on the non-volatile memory based on the packet.

According to another aspect of an embodiment, an electronic system includes: a plurality of hosts; a memory configured to store link data corresponding to at least one host of the plurality of hosts; a switch configured to establish a link with the at least one host based on the link data, and receive a command and data from the at least one host while the link is established; and a storage device configured to perform a data operation based on the command and the data storage.

### BRIEF DESCRIPTION OF DRAWINGS

The above and other aspects and features will be more apparent from the following description of embodiments with reference to the attached drawings, in which:
FIG. 1 is a schematic block diagram of an electronic system according to an embodiment.
FIG. 2 is a schematic block diagram of an electronic system according to an embodiment.
FIG. 3 is a block diagram for illustrating an operation of an electronic system including a semiconductor device according to an embodiment.
FIG. 4 is a simplified diagram of a Link Training and Status State Machine (LTSSM) included in a semiconductor device according to an embodiment.
FIG. 5 is a simplified diagram of an LTSSM included in a semiconductor device according to an embodiment.
FIGS. 6 and 7 are diagrams for illustrating an operation of a system including a semiconductor device according to an embodiment.
FIG. 8 is a block diagram of a storage device according to an embodiment.
FIG. 9 is a flowchart of a link connection method of a switch according to an embodiment.
FIG. 10 is a flowchart of a host monitoring method of a switch, according to an embodiment.
FIG. 11 is a block diagram of a storage device according to an embodiment.
FIG. 12 is a block diagram of a storage device according to an embodiment.
FIG. 13 is a schematic block diagram of an electronic system according to an embodiment.
FIG. 14 is a block diagram of a computing system according to an embodiment.
FIG. 15 is a block diagram of a vehicle system according to an embodiment.

### DETAILED DESCRIPTION

Embodiments will be described more fully hereinafter with reference to the accompanying drawings. Each embodiment provided in the following description is not excluded from being associated with one or more features of another example or another embodiment also provided herein or not provided herein but consistent with the present disclosure. In the following detailed description, only certain embodiments have been shown and described, simply by way of illustration.

Accordingly, the drawings and description are to be regarded as illustrative in nature and not restrictive. Like reference numerals designate like elements throughout the specification. In methods described with reference to the drawings, the order of operations may be changed, several operations may be merged, some operations may be divided, and specific operations may not be performed.

In addition, expressions written in the singular may be construed in the singular or plural unless an explicit expression such as "a" or "single" is used. Terms including an ordinary number, such as first and second, are used for describing various constituent elements, but the constituent elements are not limited by the terms. These terms may be used for the purpose of distinguishing one component from another.

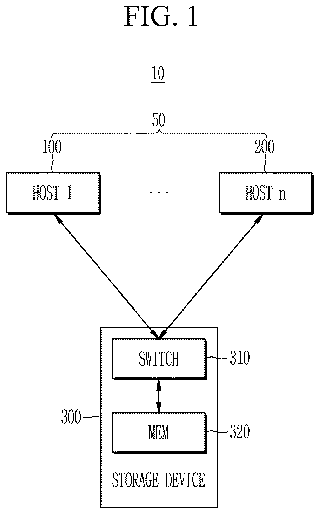

FIG. 1 is a schematic block diagram of an electronic system according to an embodiment.

Referring to FIG. 1, an electronic system 10 according to an embodiment includes a plurality of hosts 50 and a storage device 300. The plurality of hosts 50 includes first to n^{th} hosts 100 to 200, where n may be an integer greater than 1. The plurality of hosts 50 may be connected with the storage device 300, and may read data from the storage device 300, erase data from the storage device 300, or write data to the storage device 300. The plurality of hosts 50 may be implemented as a Central Processing Unit (CPU), an Application Processor (AP), a System on Chip (SoC), or the like. In some embodiments, the electronic system 10 may be disposed in a vehicle to form an electronic system. For example, the plurality of hosts 50 may be an Electronic Control Unit (ECU) that controls various functions related to the operation of the vehicle.

The storage device 300 may be implemented as various types of storage devices, such as a Solid-State Drive (SSD), embedded MultiMedia Card (eMMC), Universal Flash Storage (UFS), Compact Flash (CF), Secure Digital (SD), Micro Secure Digital (Micro-SD), Mini Secure Digital (Mini-SD), extreme Digital (xD), or memory stick.

In an embodiment, when the storage device 300 is an SSD, the storage device 300 may be a device that conforms to the Non-Volatile Memory express (NVMe) standard. When the storage device 300 is an embedded memory or an external memory, the storage device 300 may be a device conforming to the UFS standard or the eMMC standard. The plurality of hosts 50 and the storage device 300 may each generate and transmit packets according to an adopted standard protocol.

In some embodiments, the plurality of hosts 50 and the storage device 300 may use the Peripheral Component Interconnect express (PCIe) interface protocol. The PCIe interface protocol is a serial-transmission type interface established by the Peripheral Component Interconnect Special Interest Group (PCI-SIG) and provides a bidirectional connection that allows data to be transmitted and received simultaneously. A bidirectional connection involves a simplex transmit path and a simplex receive path, and to emphasize this structure, the bidirectional connection model employed by the PCIe interface protocol is sometimes referred to as the dual-simplex connection model.

The storage device 300 may transmit and receive data by using the PCIe interface protocol. In this case, a transmit path and a receive path along which the data travels are defined as links, and a link may include one or more pairs of transmit path and receive path. Furthermore, the paired transmit path and receive path are defined as lanes, and the number of lanes that form one link is defined as a link width. The storage device 300 may establish links at the physical layer of the PCIe interface protocol to transmit and receive data. For ease of description, the plurality of hosts 50 and the storage device 300 are described as utilizing the PCIe interface protocol, but embodiments are not necessarily limited thereto, and the plurality of hosts 50 and the storage device 300 may be implemented using a variety of interface protocols. For example, the plurality of hosts 50 and the storage device 300 may use an interface protocol, such as Serial Advanced Technology Attachment (SATA), SATA express (SATAe), Serial Attached Small Computer System Interface (SCSI), Non-Volatile Memory Express (NVMe), Advanced Host Controller Interface (AHCI), or multimedia card (MMC).

The storage device 300 may perform a link up process to establish a link with the plurality of hosts 50. The storage device 300 according to an embodiment may include a switch 310 and a memory 320.

The switch 310 may perform the link-up process for the plurality of hosts 50. The link-up process may include Signal Integrity (SI) training. The switch 310 includes a Link Training and Status State Machine (LTSSM) that represents the various states of the link while performing the link up process. The LTSSM may determine the link width, the data rate, the voltage level and slew rate of the signal carrying the data, the number of data lanes, the lane number, the lane polarity, and the boundaries between consecutive bits.

When the switch 310 completes the link-up process to establish links with the plurality of hosts 50, the protocol data and link data of the plurality of hosts 50 may be stored in the memory 320. The protocol data may include data for identifying the plurality of hosts 50. For example, the protocol data may include identifiers (IDs) of the plurality of hosts 50, port numbers, version information, and the like. Link data are parameters set in the link-up process, which may include preset values that the LTSSM sets in a recovery state during the link-up process. The preset values may include different coefficient values, voltage ratio values, and the like for the transmission equalizer to implement preshoot and de-emphasis. For example, the switch 310 may store first protocol data and first link data of the first host 100 in the memory 320, and store second protocol data and second link data of the n^{th} host 200 in the memory 320. In some embodiments, the switch 310 may record data to the memory 320 in a Single Level Cell (SLC) scheme. In some embodiments, the switch 310 may record data to the memory 320 in a Multi-Level Cell (MLC) scheme. The MLC scheme may also include a Triple Level Cell (TLC) scheme, a Quad Level Cell (QLC) scheme, and others.

The memory 320 may be implemented with a non-volatile memory. For example, memory 320 may be implemented with a NAND flash Memory, a Vertical NAND (VNAND), a NOR flash memory, a Resistive Random Access Memory (RRAM), a Phase-Change Random Access Memory (PRAM), a Conductive Bridging RAM (CBRAM), a Magneto resistive Random Access Memory (MRAM), a Ferroelectric Random Access Memory (FRAM), or a Spin Transfer Torque Random Access Memory (STT-RAM). The memory 320 can store protocol data and link data even when powered off.

When the plurality of hosts 50 is connected, the switch 310 may check whether there are protocol data stored in the memory 320. For example, the switch 310 may check whether there are protocol data stored in the memory 320 when the switch is powered on and the plurality of hosts 50 is connected. When there are the protocol data stored in the memory 320, the switch 310 may determine whether the protocol data in the memory 320 matches the protocol data of the plurality of hosts 50. In an embodiment, the switch 310 may receive protocol data from the plurality of hosts 50 when connected to the plurality of hosts 50. In an embodiment, when the switch 310 is connected to the plurality of hosts 50, the switch 310 may request protocol data from the plurality of hosts 50 and receive the protocol data in response to the request.

When the protocol data in the memory 320 matches the protocol data of the plurality of hosts 50, the switch 310 may perform the link-up process with the plurality of hosts 50 by using the link data in the memory 320 associated with the matching protocol data. By allowing the switch 310 to use the link data stored in the memory 320, the LTSSM may omit setting the recovery state, allowing the plurality of hosts 50 and the storage device 300 to rapidly establish a link. When there is no protocol data stored in the memory 320, or when the protocol data in the memory 320 does not match the protocol data of the plurality of hosts 50, the switch 310 may perform the link-up process from the beginning (i.e., may set the recovering state).

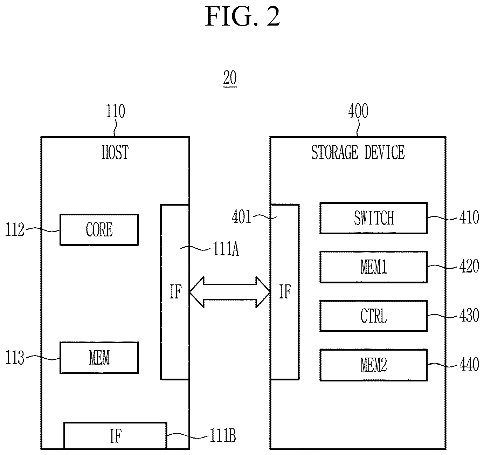

FIG. 2 is a schematic block diagram of an electronic system according to an embodiment.

Referring to FIG. 2, an electronic system 20 according to an embodiment may include a host 110 and a storage device 400. In FIG. 2, one host 110 is shown to illustrate a configuration in which the storage device 400 establishes a link with the host 110 in the electronic system 20, but embodiments are not necessarily limited thereto, and the electronic system 20 may further include one or more additional hosts.

The host 110 may control the storage device 400 to store data in the storage device 400, or to read data stored in the storage device 400. The host 110 may be one of a Central Processing unit (CPU), an Application Processor (AP), a System-On-Chip (SoC), an Electronic Control Unit (ECU), and the like.

The host 110 may include a first interface (IF) 111A that is connected to the storage device 400, a second interface (IF) 111B that is connected to other components, a core (core) 112 that executes computations, and a memory (MEM) 113. According to an embodiment, the host 110 may include two or more cores 112, and the memory 113 may include a cache memory or the like within the host 110. According to an embodiment, the host 110 may further include an accelerator to execute the computation. For example, the accelerator may execute AI data computations and more. The host 110 may be further connected to other devices by using the second interface 111B. In some embodiments, the electronic system 20 may further include components, such as sensors, graphics processing units, and network cards, and the host 110 may communicate with these components through the second interface 111B.

The storage device 400 may include an interface (IF) 401, a switch (switch) 410, a first memory (MEM1) 420, a controller (CTRL) 430, and a second memory (MEM2) 440. The description of the switch 310 and the memory 320 of FIG. 1 may be equally applied to the description of the switch 410 and the first memory 420 of FIG. 2. That is, the first memory 420 may store the first protocol data and the link data of the host 110. When the host 110 is connected, the switch 410 may determine whether data (i.e., protocol data and link data) is stored in the first memory 420. When there is no protocol data stored in the first memory 420, the switch 410 may perform the link-up process to establish a link with the host 110. When the switch 410 has completed the link-up process and established the link with the host 110, the switch 410 may store the link data in the first memory 420.

When the host 110 is connected and the second protocol data and the link data are stored in the first memory 420, the switch 410 may determine whether the second protocol data in the first memory 420 matches the first protocol data in the host 110. When the first protocol data matches the second protocol data, the switch 410 may establish a link with the host 110 based on the link data in the first memory 420. When the first protocol data does not match the second protocol data, the switch 410 may perform the link up process. The first and second memories 420 and 440 may be non-volatile memories. In some embodiments, the first and second memories 420 and 440 may be implemented as a single memory.

The switch 410 may periodically obtain protocol data from the host 110. In an embodiment, the switch 410 may periodically transmit an identification command to the host 110 and receive protocol data from the host 110 in response to the identification command. In an embodiment, the host 110 may periodically transmit the protocol data to the switch 410.

The switch 410 may determine whether the protocol data of the host 110 has been updated. For example, the switch 410 may receive third protocol data from the host 110, and the switch 410 may determine whether the second protocol data of the first memory 420 matches the third protocol data received from the host 110. When the second protocol data matches the third protocol data, the switch 410 may determine that the protocol data has not been updated. When the second protocol data does not match the third protocol data, the switch 410 may determine that the protocol data has been updated. When the protocol data has been updated, the switch 410 may reconfigure the link. In this regard, the switch 410 may perform the link-up process again based on the third protocol data to obtain new link data. For example, the protocol data may change depending on the number and type of devices connecting to the host 110, the version of the host 110, and the like. In some embodiments, the switch 410 may re-establish the link when the external temperature of the electronic system 20, the temperature of the host 110, the temperature of the storage device 400, or the amount of power supplied to the electronic system 20 changes. The switch 410 may store new link data based on the reconfigured link in the first memory 420.

The controller 430 operates by receiving a control command from the host 110 through the interface 401, and may receive data and store the received data in the second memory 440, or may retrieve the data stored in the second memory 440 and output the data to the host 110. The control command may include address information, and the controller 430 may store data in at least one of the plurality of memory chips included in the second memory 440 by referring to the address information, or read data from at least one of the plurality of memory chips.

In an embodiment, the first interface 111A of the host 110 and the interface 401 of the storage device 400 may exchange data with each other by the PCIe interface protocol. To exchange data with each other, when the electronic system 20 is powered on and the host 110 and the storage device 400 are powered, the link-up process may be executed to configure the link between the interfaces 111A and 401. In the link-up process, the data rate, the voltage level and slew rate of the signal transmitting the data, the number and polarity of the data lanes, the lane number, and the like may be determined. The determined data rate, the determined voltage level and determined slew rate of the signal transmitting the data, the determined number and polarity of the data lanes, the determined lane number, and the like may be used for communication between the host 110 and the storage device 400 via the link. While the interfaces 111A and 401 are described as utilizing the PCIe interface protocol, embodiments are not necessarily limited thereto, and SATA, SATAe, SAS, NVMe, AHCI, or MMC may be used. In an embodiment, the electronic system 20 may further include hosts other than host 110, and the storage device 400 may communicate with the other hosts through the interface 401.

In an embodiment, when the electronic system 20 further includes other components that connect through the second interface 111B of the host 110, the host 110 and the components may also establish a link through the link-up process described with reference to FIG. 2.

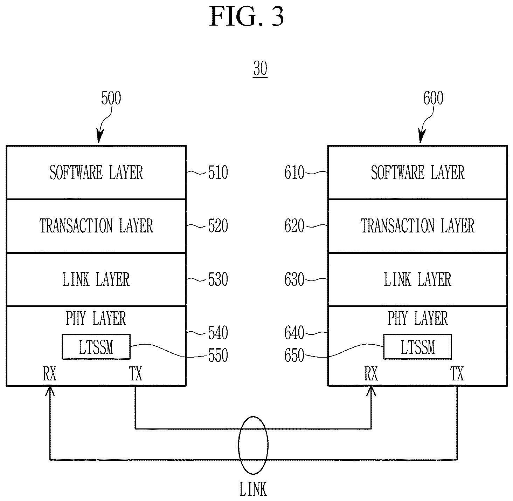

FIG. 3 is a block diagram for illustrating an operation of the electronic system including a semiconductor device according to an embodiment.

Referring to FIG. 3, an electronic system 30 according to an embodiment may include a first semiconductor device 500 and a second semiconductor device 600. The first semiconductor device 500 and the second semiconductor device 600 may exchange data according to the PCIe interface protocol. In an embodiment, the first semiconductor device 500 may be a storage device and the second semiconductor device 600 may be a host, such as an Electronic Control Unit (ECU), but embodiments are not necessarily limited thereto. The electronic system 30 may include a plurality of hosts, and the first semiconductor device 500 may be connected to and communicate with the plurality of hosts.

As illustrated in FIG. 3, the PCIe architecture may include a plurality of logically distinct layers 510 to 540 and 610 to 640. For example, the PCIe architecture may include software layers 510 and 610, transaction layers 520 and 620, link layers 530 and 630, and physical layers 540 and 640.

Of the layers included in the PCIe architecture, the physical layers 540 and 640 may be the lowest layers and may serially transmit packets generated by the link layer 530 and 630 between the first and second semiconductor devices 500 and 600. The physical layer 540 and 640 provide links formed by transmitters TX and receivers RX of the first and second semiconductor devices 500 and 600, respectively, and packets may be transmitted between the first and second semiconductor devices 500 and 600 through the link.

The link layer 530 and 630 correspond to higher layers of the physical layers 540 and 640, and may provide functions to ensure the reliability of packet transmission over the link, and to manage the link. For example, the link layers 530 and 630 may add sequence number information, Link Cyclic Redundancy Check (LCRC) information, and the like to the packets generated by the transaction layers 520 and 620.

The transaction layers 520 and 620 may receive a read or write request from the software layers 510 and 610, generate request packets, and transmit the generated request packets to the link layers 530 and 630. In addition, the transaction layer 520 and 620 may receive response packets from the link layers 530 and 630 and match the received response packets to the request received from the software layers 510 and 610. The transaction layers 520 and 620 may transmit packets including header information and End-to-End Cyclic Redundancy Check (ECRC) information to the link layers 530 and 630.

The software layer 510 and 610 are top layers that are not defined by the PCIe specification, and for example, the software layers 510 and 610 may include software that drives the semiconductor devices 500 and 600 that includes the PCIe interface protocol, or software that receives data read or write requests from a user or host application and provides a responses to the received request to the user or host application.

More specific details about the physical layers 540 and 640, the link layers 530 and 630, and the transaction layers 520 and 620 may be understood by referring to the PCIe specification.

The physical layer 540 of the first semiconductor device 500 may include the LTSSM 550. Similarly, the physical layer 640 of the second semiconductor device 600 may also include the LTSSM 650. In an embodiment, the first semiconductor device 500 may include a switch that manages the routing of packets of the plurality of hosts (including the second semiconductor device 600), and the switch may store the LTSSM. In an embodiment, the second semiconductor device 600 may store the LTSSM in a PCIe controller, but is not necessarily limited to this form.

Referring to the first semiconductor device 500 as an example, the LTSSM 550 may include a Detect state, a Polling state, a Configuration state, a Recovery state, an L0 state, an L0s state, an L1 state, an L2 state, a Hot Reset state, a Loopback state, and a Disable state. The LTSSM 550 transitions through 11 states and may perform multiple processes to transmit data according to the PCIe interface protocol. The definition for each of the 11 states included in the LTSSM 550 is also provided in the PCIe specification, and the LTSSM 550 may be implemented to conform to the definitions for LTSSMs provided in the PCIe specification. Similarly, the description of the LTSSM 550 may be equally applicable to the LTSSM 650.

In an embodiment, at least one of the LTSSM 550 of the first semiconductor device 500 and the LTSSM 650 of the second semiconductor device 600 may execute a link-up process to establish a link for the first and second semiconductor devices 500 and 600 to exchange data with each other. As previously mentioned, the paths along which data is transmitted between the first and second semiconductor devices 500 and 600 may be defined as links LINKS. A link LINK includes one or more pairs of transmit path and receive path, where a pair of transmit path and receive path may be defined as a "lane". In addition, the number of lanes that make up one link LINK may be defined as a "link width".

To establish a link LINK between the first and second semiconductor devices 500 and 600, at least one of the LTSSM 550 of the first semiconductor device 500 and the LTSSM 650 of the second semiconductor device 600 may perform link number negotiation and lane number negotiation to determine whether the lanes are operating normally, select lanes to be used for data transmission to establish the link, and determine a link width.

When the link-up is completed, the first and second semiconductor devices 500 and 600 may exchange data with each other. As previously described, the data packets exchanged between the physical layers 540 and 640 may further include header information, ECRC information, sequence number information, LCRC information, and the like, in addition to the actual data to be transmitted.

Further, when the link-up is completed, the first semiconductor device 500 may store the link data used in the link-up in the memory. For example, the first semiconductor device 500 may store the link data in association with protocol data of the second semiconductor device 500. When the first semiconductor device 500 is disconnected from the second semiconductor device 600 and then reconnected, the first semiconductor device 500 may be quickly connected to the second semiconductor device 600 by using the link data stored in the memory. When the protocol data of the second semiconductor device 600 has not changed, the first semiconductor device 500 may use the link data stored in the memory. Accordingly, the electronic system 30 may achieve rapid link establishment of the first and second semiconductor devices 500 and 600.

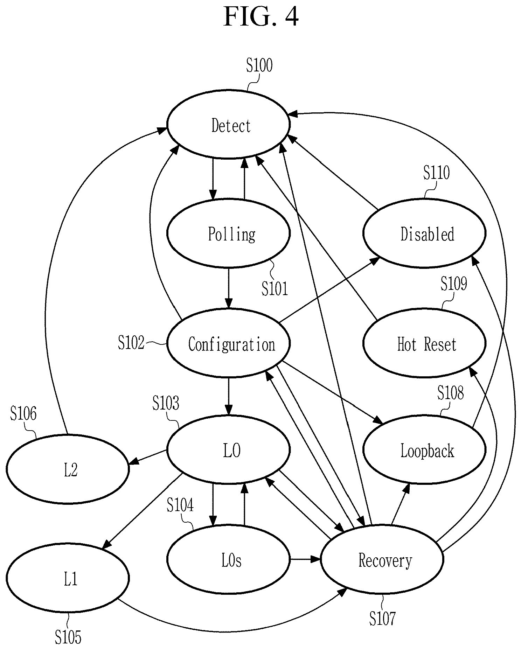

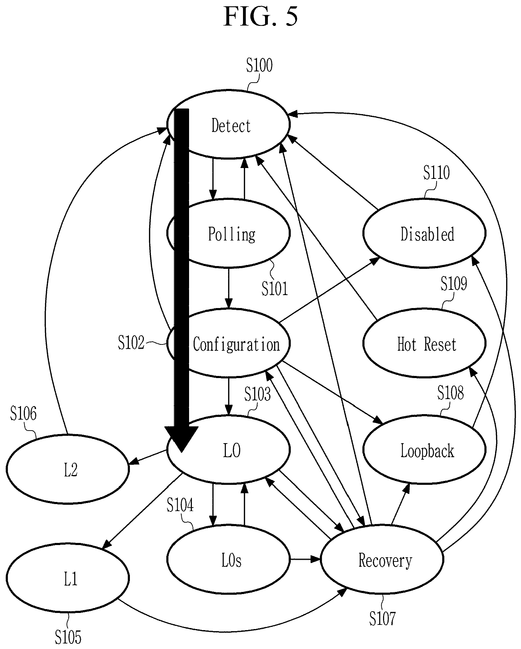

FIGS. 4 and 5 are simplified diagrams of the LTSSM included in the semiconductor device according to an embodiment.

Prior to the operations shown in FIGS. 4 and 5, a determination may be made with respect to whether protocol data received from the host corresponds to protocol data stored in the memory. If protocol data received from the host does not match protocol data stored in the memory, or if protocol data is not stored in the memory, then the operations shown in FIG. 4 are performed to perform a link-up process to configure and initialize a link. If protocol data received from the host matches the protocol data stored in the memory, then the link-up process may be performed by using link data stored in association with the matching protocol data. In this regard, the link data stored in association with the matching protocol data may be reused to perform the link-up process to configure and initialize the link.

Referring to FIG. 4, the semiconductor device may compare first protocol data received from the host with second protocol data stored in the memory. The operations shown in FIG. 5 may be performed based on a determination first protocol data received from the host matches second protocol data stored in the memory. The LTSSM may provide a link-up process, which is a control process to configure and initialize the link, as previously described. In addition to configuring and initializing the links on the PCIe interfaces, the LTSSM may also support packet transmission, recover from link errors, and restart PCIe interfaces in a low-power state.

For example, the LTSSM may move through 11 states (S100 to S110) and perform the functions mentioned above. The LTSSM may enter a detect state S100 in which a circuit of the physical layer is initialized, or in which the LTSSM detects the presence of another external device connected to the PCIe interface in response to a command received from the link layer. For example, the LTSSM may enter the detection state S100 according to an instruction of the switch in the semiconductor device. When there is no protocol data stored in the memory connected with the switch, or when the protocol data of the host does not match the protocol data of the memory, the switch may instruct the LTSSM to perform the link-up process. From the detect state S100, the LTSSM may move to a polling state S101 of detecting the receiver associated with the transmitter and setting bit lock, symbol lock, lane polarity, and the like. For example, when the LTSSM transitions from the detect state S100 to the poll state S101, the lanes in which the receiver is not detected may enter an electrical idle state.

When the LTSSM moves to a configuration state S102, a data rate, a lane number, a link width, and the like may be set. After the operation in the configuration state S102 is completed, the LTSSM may enter an L0 state S103, which is the normal operating state of exchanging data over the established link. Depending on the operation situation of the PCIe interface, the LTSSM may enter an L0s state S104, which is an electrical idle/standby state, an L1 state S105, which is a low-power standby/sleep state, or an L2 state S106, which is an off state.

Further, when an error occurs while operating in the L0 state S103, the LTSSM may enter a recovery state S107. Also, to return from the L1 state S105 to the L0 state S103, the LTSSM may move to the recovery state S107. In the recovery state S107, the LTSSM may execute functions, such as bit lock, symbol lock, and inter-lane skew removal, or change the link rate based on data, such as training sequences, exchanged by the transmitter and the receiver. For example, in the recovery state S107, the LTSSM has sub-states, such as Recovery.RcvrLock, Recovery. Equalization, Recovery. Speed, Recovery. RcvrCfg, and Recovery. Idle, and may enter the detect state S100, the configuration state S102, the L0 state S103, a loopback state S108, a hot reset state S109, or a disabled state S110 depending on the result in the sub-state. The LTSSM may optimize equalization by exchanging the training sequences with the receiver in the sub-state of Recovery. Equalization. In Recovery. Equalization, LTSSM may set a preset and complete the equalization while changing the phase from phase0 to phase3 in turn. Each phase, from phase0 to phase3, may represent an equalization process. For example, the LTSSM may change phases to increase an operating speed to a desired speed. The speeds corresponding to phase0 to phase3 may be stored in the memory as link data.

The loopback state S108 is a state for a test, where the LTSSM may enter the loopback state S108 based on the value of the loopback bit in a predetermined ordered set of symbols exchanged by devices connected to the PCIe interface. In the loopback state S108, the receiver may re-transmit all received packets identically.

In the hot reset state S109, the LTSSM may perform the function of resetting the link. In the disabled state S110, the transmitter may be switched to an electrical idle state by the LTSSM when the receiver is in a low impedance state.

In the link-up process, which configures the link, the LTSSM moves through the 11 states (S100 to S110) in a predetermined order to perform the functions described above. When the link-up is successful, the states actually executed by the LTSSM among the states S100 to S110 until the link-up is successful and the order of the execution of the states may be stored in the memory or the like as a reference order. That is, the link data stored by the memory may include a reference order. When the switch re-establishes a link, the switch may validate the link-up process based on the stored reference order. For example, the switch may determine whether the sequence of states executed by the LTSSM (state sequence) until the link-up is completed matches the reference sequence. When the sequence of states executed by the LTSSM matches the reference sequence, the switch may determine that the verification is successful, and when the sequence of states executed by the LTSSM does not match the reference sequence, the switch may determine that the verification fails. When the verification fails, the switch may change the link parameter and execute the link-up process again. When the link-up is successful, the switch may store the link parameter in the memory as link data.

FIG. 5 is a simplified diagram of an LTSSM included in a semiconductor device according to an embodiment. The semiconductor device may compare first protocol data received from the host with second protocol data stored in the memory. The operations shown in FIG. 5 may be performed based on a determination first protocol data received from the host matches second protocol data stored in the memory.

Referring to FIG. 5, a semiconductor device (for example, a storage device) according to an embodiment may include a switch and a memory connected with the switch. The switch may include an LTSSM. The description of the switch 310 and the memory 320 of FIG. 1 may be equally applicable to the description of the switch and the memory.

The semiconductor device may be connected to a host (for example, an Electronic Control Unit (ECU)). When the semiconductor device is connected to the host, the semiconductor device may receive first protocol data from the host. When the switch receives the first protocol data, the switch may determine whether to store the data in the memory. The memory may store second protocol data for the host and link data stored through the previous link-up process.

When the first protocol data matches the second protocol data, the switch may perform the link-up process by using the link data associated with the matching protocol data. For example, the switch may instruct the LTSSM to perform the link-up process, and the LTSSM may establish the link by moving through the states in the order of a detection state S100, a polling state S101, a configuration state S102, and an L0 state S103 by using the link data associated with the matching protocol data. The link data stored by the memory includes the preset values set in a recovery state S107 of the previous link-up process, and the LTSSM performing the link-up process using the link data may complete the link-up without entering a recovery state S107. Accordingly, compared to a related link-up process in which a link is established by going through the recovery state S107, the semiconductor device according to an embodiment may bypass the recovery state S107 and thereby reduce the time consumed in establishing the link.

When there is no protocol data stored in the memory, the switch may instruct the LTSSM to perform the link-up process. In addition, the switch may instruct the LTSSM to perform the link-up process when the first protocol data does not match the second protocol data, even when the memory has stored the data. Based on the instructions from the switch, the LTSSM may perform the link-up process as illustrated in FIG. 4. In this regard, the LTSSM performs the link-up process without link data, so the LTSSM may enter the recovery state S107.

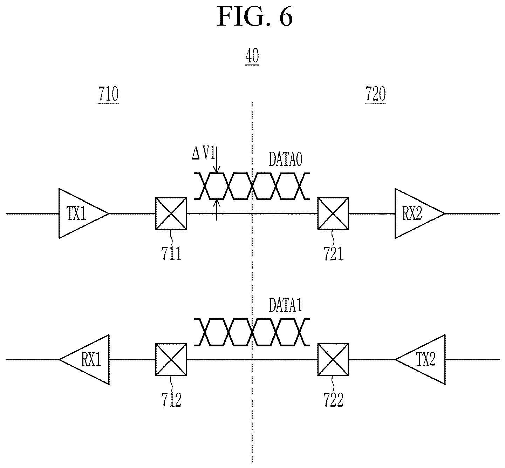

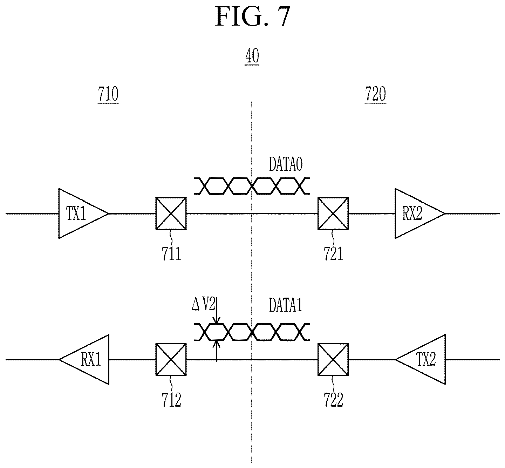

FIGS. 6 and 7 are diagrams for illustrating an operation of an electronic system including a semiconductor device according to an embodiment.

Referring to FIGS. 6 and 7, an electronic system 40 according to an embodiment may include a first semiconductor device 710 and a second semiconductor device 720. The first semiconductor device 710 may include a first transmitter TX1 and a first receiver RX1, and the second semiconductor device 720 may include a second transmitter TX2 and a second receiver RX2. In an embodiment, the first semiconductor device 710 may be a storage device and the second semiconductor device 720 may be a host, such as an Electronic Control Unit (ECU), but embodiments are not necessarily limited thereto. The electronic system 40 may include a plurality of hosts, and the first semiconductor device 710 may be connected to and communicate with the plurality of hosts.

A first data signal DATA0 may be transmitted via a first transmit path between a first transmission port 711 connected to the first transmitter TX1 and a second reception port 721 connected to the second receiver RX2. A second data signal DATA1 may be transmitted via a second transmit path between a second transmission port 722 connected to the second transmitter TX2 and a first reception port 712 connected to the first receiver RX1. The first transmit path and the second transmit path are included in one lane and may provide paths for transmitting a pair of differential signals, as illustrated in FIGS. 6 and 7.

Each of the first and second data signals DATA0 and DATA1 may have a waveform as illustrated in FIGS. 6 and 7. For example, the amplitudes △V1 and △V2 determined by the maximum voltage levels and the minimum voltage levels of the first and second data signals DATA0 and DATA1, the slew rates indicating the rates of voltage increase/decrease of the first and second data signals DATA0 and DATA1, and the like may differ in FIGS. 6 and 7.

This may be because the link data established by the LTSSM of at least one of the first and second semiconductor devices 710 and 720 when completing the link-up process is different in FIGS. 6 and 7. At least one of the first and second semiconductor devices 710 and 720 may re-execute the link-up process to re-establish the link when another component of the electronic system 40 is newly connected, when a version of a driving system of at least one of the first and second semiconductor devices 710 and 720 is updated, when the temperature is outside a predetermined range, when a predetermined amount of time has elapsed, or when power is blocked and power is newly applied.

Thus, at least one of the first and second semiconductor devices 710 and 720 may store different link data at different points in time by the re-established link. Further, due to different link data, at least one of the data signals DATA0 and DATA1 transmitted over the same lane may have different waveforms as illustrated in FIGS. 6 and 7.

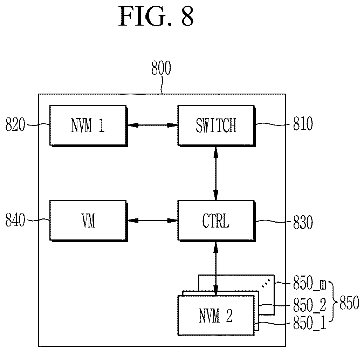

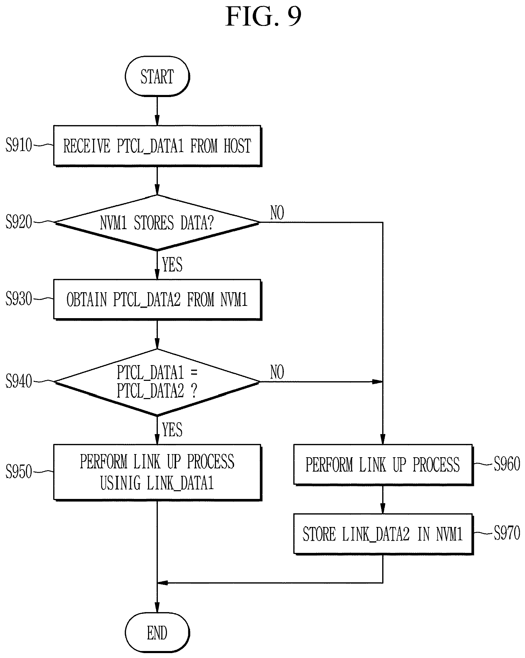

FIG. 8 is a block diagram of a storage device according to an embodiment, and FIG. 9 is a flowchart of a link connection method of a switch according to an embodiment.

Referring to FIG. 8, a storage device 800 according to an embodiment may be connected with a plurality of hosts and perform a link-up process with each host. The storage device 800 may include a switch 810, a first non-volatile memory (NVM1) 820, a controller 830, a volatile memory (VM) 840, and a second non-volatile memory (NVM2) 850. The contents for the switch 310 and the memory 320 described with reference to FIG. 1 are equally applicable to the switch 810 and the first non-volatile memory 820. That is, when the storage device 800 is connected to the host, the switch 810 may perform a link-up process based on the data in the first non-volatile memory 820.

Referring to FIGS. 8 and 9, the switch 810 may receive first protocol data PTCL_DATA1 from the host (S910). For example, when the storage device 800 is powered on and the storage device 800 and the host are connected, the host may transmit the first protocol data PTCL_DATA1 to the storage device 800. In an embodiment, the host may detect the connection and transmit the first protocol data PTCL_DATA1. In an embodiment, the storage device 800 may request protocol data from the host when connected to the host, and the host may transmit the first protocol data PTCL_DATA1 in response to the request.

When the switch 810 receives the first protocol data PTCL_DATA1, the switch 810 may determine whether the first non-volatile memory 820 has stored data (S920). The first non-volatile memory 820 may be a dedicated memory of the switch 810 connected with with the switch 810. When there are protocol data stored in the first non-volatile memory 820, the data may include protocol data of the host stored by the switch 810 and the link data used to link to the host. The protocol data may include data to identify the host. The link data may include parameters set in the link-up process.

When the first non-volatile memory 820 has stored the data, the switch 810 may obtain second protocol data PTCL_DATA2 from the first non-volatile memory 820 (S930). The switch 810 may read the second protocol data PTCL_DATA2 from the first non-volatile memory 820.

The switch 810 may determine whether the first protocol data PTCL_DATA1 matches the second protocol data PTCL_DATA2 (S940). When the state of the host has not changed, the first protocol data PTCL_DATA1 and the second protocol data PTCL_DATA2 may be the same. The state of the host may vary depending on the version, temperature, power size, etc. of the driving system. When the state changes, the switch 810 may output the changed protocol data.

When the first protocol data PTCL_DATA1 and the second protocol data PTCL_DATA2 match, the switch 810 may perform the link-up process by using the first link data LINK_DATA1 of the first non-volatile memory 820 (S950). The first link data LINK_DATA1 may be data corresponding to the second protocol data PTCL_DATA2. The first link data LINK_DATA1 includes the preset values set in the recovery state during the link-up process, so that the switch 810 may establish a link between the storage device 800 and the host without going through the recovery state. Accordingly, the storage device 800 may reduce time consumed for establishing links.

The switch 810 may perform a link-up process when the first non-volatile memory 820 does not store data (S960). The switch 810 may perform a link-up process when the first protocol data PTCL_DATA1 and the second protocol data PTCL_DATA2 do not match, even though the first non-volatile memory 820 stores the data (S960). The switch 810 may perform the link-up process by using the LTSSM described with reference to FIG. 4. The switch 810 performs the link-up process without link data, such as preset values, so that the switch 810 may enter the recovery state even when the first non-volatile memory 820 does not store the data or when the first protocol data PTCL_DATA1 and the second protocol data PTCL_DATA2 do not match.

When the link-up is completed, the switch 810 may store a link parameter used in the link-up process in the first non-volatile memory 820 as second link data LINK_DATA2 (S970). When the host is reconnected, the switch 810 may subsequently perform a link-up process by using the second link data LINK_DATA2. For example, when the storage device 800 is powered off and then is powered on and connected to the host, the switch 810 may perform the link-up process. When the switch 810 completes the link-up with the host, the host may transmit a data-related request to the storage device 800.

Referring again to FIG. 8, the controller 830 may access the second non-volatile memory 850 in response to the request from a plurality of hosts. The controller 830 may be configured to provide an interface between the second non-volatile memory 850 and the plurality of hosts. Additionally, the controller 830 may be configured to drive firmware for controlling the second non-volatile memory 850.

The controller 830 may control the operation of the second non-volatile memory 850. Specifically, the controller 830 may provide at least one of addresses, commands, data, control signals, or power along the input/output lines connected with the second non-volatile memory 850. The controller 830 may record data to the second non-volatile memory 850, erase data in the second non-volatile memory 850, or read data from the second non-volatile memory 850 by using at least one of an address, a command, a control signal, and power. The control signals may include chip enable, light enable, lead enable, and the like.

The volatile memory 840 may act as a buffer memory to mitigate the difference in speed between the second non-volatile memory 850, which is the data storage space, and the host, which is an external device of the storage device 800. The volatile memory 840 included in the storage device 800 may also operate as a type of cache memory, and may also provide space for temporarily storing data in a control operation on the second non-volatile memory 850. The controller 830 may further include a memory controller for controlling the volatile memory 840.

The volatile memory 840 may be a dynamic random access memory (DRAM) or a static random access memory (SRAM). For example, the volatile memory 840 may be implemented with a Double Data Rate Synchronous Dynamic Random Access Memory (DDR SDRAM), a Low Power Double Data Rate (LPDDR) SDRAM, a Graphics Double Data Rate (GDDR) SDRAM, a Rambus Dynamic Random Access Memory (RDRAM), and the like.

The second non-volatile memory 850 may include a plurality of memory chips 850_1 to 850_m (where m is an integer greater than 1). The second non-volatile memory 850 may record, erase, or output data based on the control of the controller 830. The storage device 800 may transmit data to the host or receive data from the host over the link.

In some embodiments, the switch 810 and the controller 830 may include security logic (i.e., security circuitry) to perform encryption. For example, the switch 810 may include first security logic and the controller 830 may include second security logic. The first security logic of the switch 810 may perform encryption on data of the host to generate first encrypted data. The switch 810 may output the first encrypted data to the controller 830. The second security logic of the controller 830 may perform encryption on the first encrypted data to generate second encrypted data. The controller 830 may output the second encrypted data to the second non-volatile memory 850. The second non-volatile memory 850 may store the second encrypted data.

In some embodiments, the switch 810 may include compression logic (i.e., compression circuitry) to compress data. The controller 830 may record the data compressed by the compression logic to the second non-volatile memory 850

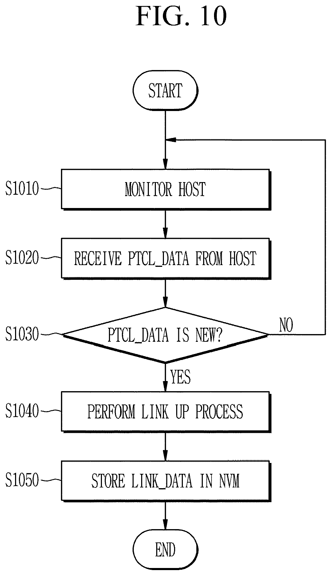

FIG. 10 is a flowchart of a host monitoring method of the switch according to an embodiment.

Referring to FIGS. 8 and 10, the switch 810 according to the embodiment may monitor a connected host (S1010). The switch 810 and the host may establish a link through a link-up process and exchange data. In an embodiment, the switch 810 may transmit an identification signal to the host. For example, the switch 810 may periodically transmit an identification signal.

The switch 810 may receive protocol data PTCL_DATA from the host (S1020). In some embodiments, the host may periodically transmit the protocol data PTCL_DATA to the storage device 800 even when the host does not receive an identification signal. The protocol data PTCL_DATA may include data to identify the host.

When the protocol data PTCL_DATA is received, the switch 810 may determine whether the protocol data PTCL_DATA is new data (S1030). For example, when the host connected with the storage device 800 is a new host that has never been connected before, or when the host has a changed state, the protocol data PTCL_DATA may include new data. The switch 810 may read data stored in the first non-volatile memory 820. The switch 810 may determine that the protocol data PTCL_DATA is new data when none of the data stored in the first non-volatile memory 820 matches the protocol data PTCL_DATA. The switch 810 may determine that the protocol data PTCL_DATA is not new data when any of the data stored in the first non-volatile memory 820 matches the protocol data PTCL_DATA. The switch 810 may continue to monitor the host when the protocol data PTCL_DATA is not new data (S1010).

When the protocol data PTCL_DATA is new data, the switch 810 may perform a link-up process (S1040). The switch 810 may perform the link-up process by using the LTSSM described in FIG. 4. Because the switch 810 performs the link-up process without link data, such as preset values, the switch 810 may enter a recovery state.

When the link-up is completed, the switch 810 may store the link parameter used in the link-up process as link data LINK_DATA in the first non-volatile memory 820 (S1050). Subsequently, when the host is connected again, the switch 810 may perform the link-up process by using the link data LINK_DATA. For example, when the storage device 800 is powered off and then is powered on and connected to the host, the switch 810 may perform the link-up process.

When the switch 810 completes the link-up with the host, the host may transmit a data-related request to the storage device 800.

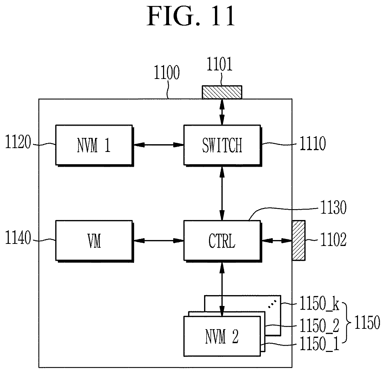

FIG. 11 is a block diagram of a storage device according to an embodiment.

Referring to FIG. 11, a storage device 1100 according to an embodiment may be connected with a plurality of hosts and perform a link-up process with each host. The storage device 1100 may include a switch 1110, a first non-volatile memory (NVM1) 1120, a controller 1130, a volatile memory (VM) 1140, and a second non-volatile memory (NVM2) 1150. The descriptions of the switch 810, the first non-volatile memory 820, the controller 830, the volatile memory 840, and the second non-volatile memory 850 of FIG. 8 may be identically applicable to the descriptions of the switch 1110, the first non-volatile memory 1120, the controller 1130, the volatile memory 1140, and the second non-volatile memory 1150. For this reason, redundant descriptions will be omitted.

The storage device 1100 may communicate with external devices through a first port 1101 and a second port 1102. For example, the first port 1101 may be a port that supports communication with a plurality of hosts. The first port 1101 may use an interface protocol, such as PCIe, SATA, SATAe, SAS (SA-SCSI), NVMe, AHCI, or MMC. The switch 1110 may receive protocol data from the plurality of hosts through the first port 1101. The switch 1110 may perform a link-up process through the first port 1101 based on the protocol data of the plurality of hosts and data in the first non-volatile memory 1120. In this case, when the first non-volatile memory 1120 is not storing the protocol data of the host to which the link is to be established, the switch 1110 may perform the link-up process as illustrated in FIG. 4.

When the link-up is completed, the switch 1110 may communicate with the plurality of hosts based on established link widths, data rates, and the like. For example, the switch 1110 may transmit the data received from the controller 1130 to any host of the plurality of hosts through the first port 1101. The switch 1110 may receive the data of the plurality of hosts through the first port 1101 and transmits the received data to the controller 1130. The controller 1130 may process data of the plurality of hosts.

The second port 1102 may be a port that supports communication with a debugging device. For example, the second port 1102 may be a port that supports a debugging interface. A debugging interface may use methods, such as Joint Test Action Group (JTAG), or Serial Wire Debug (SWD). The controller 1130 may receive debugging data through the second port 1102. The controller 1130 may perform debugging of the storage device 1100 based on the debugging data. In some embodiments, the storage device 1100 may further include an authentication device for authenticating the debugging device. The authentication device may receive authentication data of the debugging device through the second port 1102, and may verify the authentication data. When the verification of the authentication data is successful, the authentication device may output the debugging data to the controller 1130.

In some embodiments, the authentication device may be integrated into the controller 1130.

In some embodiments, the storage device 1100 may further include at least one port for communicating with another external device in addition to the first port 1101 and the second port 1102.

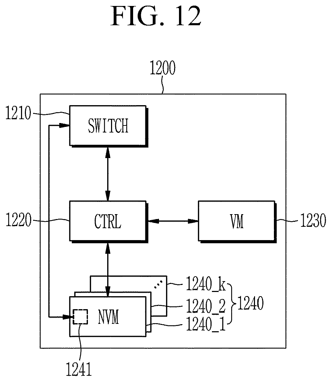

FIG. 12 is a block diagram of a storage device according to an embodiment.

Referring to FIG. 12, a storage device 1200 according to an embodiment may be connected with a plurality of hosts and perform a link-up process with each host. The storage device 1200 may include a switch 1210, a controller 1220, a volatile memory (VM) 1230, and a non-volatile memory (NVM) 1240. The non-volatile memory 1240 may include a plurality of memory chips 1240_1 to 1240_k (where k is an integer greater than 1). In the non-volatile memory 1240, the first memory chip 1240_1 may include a switch region 1241. The switch region 1241 may be a defect-free region formed of memory cells that are normal in the first memory chip 1240_1. The controller 1220 may determine a switch region 1241 in the non-volatile memory 1240 and assign the switch region 1241 as a dedicated region of the switch 1210. The switch 1210 may perform a link-up process and store protocol data and link data of the host in the switch region 1241 when a link is established with the host. In some embodiments, the switch 1210 may record data to the switch region 1241 in an SLC manner.

When the storage device 1200 is connected to the host, the switch 1210 may perform a link-up process based on the data in the switch region 1241. When the storage device 1200 is connected to the host, the switch 1210 may determine whether data (i.e., protocol data and link data) is stored in the switch region 1241. When there is no protocol data stored in the switch region 1241, the switch 1210 may perform the link-up process as illustrated in FIG. 4.

The switch 1210 may receive first protocol data from the connected host. The switch 1210 may determine whether the switch region 1241 stores data corresponding to the first protocol data. For example, the switch 1210 may read second protocol data in the switch region 1241. When the first protocol data and the second protocol data match, the switch 1210 may perform the link-up process based on the link data in the switch region 1241. The switch region 1241 may store link data corresponding to the second protocol data. When the first protocol data and the second protocol data do not match, the switch 1210 may perform the link-up process as illustrated in FIG. 4. The switch 1210 may establish a link between the storage device 1200 and the plurality of hosts through the link-up process.

When the link is established, the switch 1210 may transmits requests and data of the host to the controller 1220. The controller 1220 may access the non-volatile memory 1240 in response to the request from the plurality of hosts. The controller 1220 may be configured to provide an interface between the non-volatile memory 1240 and the plurality of hosts. Additionally, the controller 1220 may be configured to drive firmware for controlling the non-volatile memory 1240.

The controller 1220 may control the operation of the non-volatile memory 1240. Specifically, the controller 1220 may provide at least one of addresses, commands, data, control signals, or power along the input/output lines connected with the non-volatile memory 1240. The controller 1220 may record data to the non-volatile memory 1240, erase data from the non-volatile memory 1240, or read data from the non-volatile memory 1240 by using at least one of addresses, commands, control signals, and power. The control signals may include chip enable, light enable, lead enable, and the like. In some embodiments, the controller 1220 may record data to data regions in the non-volatile memory 1240 except for the switch region 1241. In some embodiments, the controller 1220 may record data to the data region in an MLC manner.

The volatile memory 1230 may act as a buffer memory to mitigate the difference in speed between the non-volatile memory1240, which is the data storage space, and the host, which is an external device of the storage device 1200. The volatile memory 1230 included in the storage device 1200 may also operate as a type of cache memory, and may also provide space for temporarily storing data in a control operation on the non-volatile memory1240. The controller 1220 may further include a memory controller for controlling the volatile memory 1230.

The Volatile memory 1230 may be a Dynamic Random Access Memory (DRAM) or a Static Random Access Memory (SRAM). For example, the volatile memory 1230 may be implemented with a DDR SDRAM, LPDDR SDRAM, GDDR SDRAM, RDRAM, or the like.

The non-volatile memory 1240 may record, erase, or output data based on the control of the switch 1210 or the controller 1220. The storage device 1200 may transmit data to the host or receive data from the host through the link.

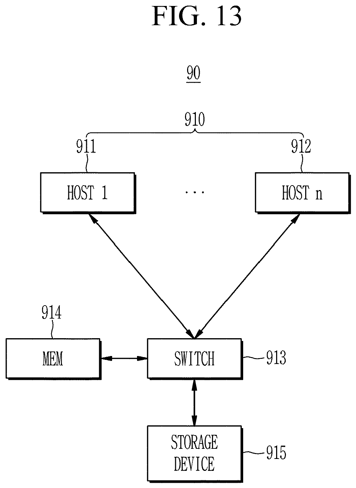

FIG. 13 is a schematic block diagram of an electronic system according to an embodiment.

Referring to FIG. 13, an electronic system 90 according to an embodiment includes a plurality of hosts 910, a switch 913, a memory 914, and a storage device 915. The plurality of hosts 910 includes first to n^{th} hosts 911 to 912, where n may be an integer greater than 1. The plurality of hosts 910 may be connected to the storage device 915 through a switch 913. The plurality of hosts 910 may read data from the storage device 915, erase data from the storage device 915, or record data to the storage device 915. The plurality of hosts 910 may be implemented with a Central Processing Unit (CPU), an Application Processor (AP), a System-On-Chip (SoC), or the like. In some embodiments, the electronic system 90 may be disposed in a vehicle to form an electronic system. For example, the plurality of hosts 910 may be an Electronic Control Unit (ECU) that controls various functions related to the operation of a vehicle.

The switch 913 may establish a link between the plurality of hosts 910 and the storage device 915. When the plurality of hosts 910 and the storage device 915 are connected, the switch 913 may establish a link by using data stored in the memory 914. The memory 914 may be implemented with a non-volatile memory. For example, the memory 914 may be implemented with a NAND flash memory, vertical NAND flash memory (VNAND), NOR flash memory, Resistive RAM (RRAM), Phase change RAM (PRAM), Conductive Bridging RAM (CBRAM), Magnetoresistive RAM (MRAM), Ferroelectric RAM (FRAM), or Spin-Transfer Magnetization Reversal RAM (STT-RAM). In this regard, the memory 914 can retain data even when powered off.

The memory 914 may store protocol data and link data from the plurality of hosts 910. The protocol data is data for identifying the plurality of hosts 910, which may include identifiers (IDs) of the plurality of hosts 910, port numbers, version information, and the like. The link data are parameters set in the link-up process, which may include preset values set by the LTSSM in the recovery state during the link-up process. The switch 913 includes an LTSSM that represents various states of the link while performing the link-up process, and the link width, the data rate, the voltage level and slew rate of the signal transmitting the data, the number of data lanes, the lane number, the polarity of the lanes, the boundaries between consecutive bits, and the like may be determined according to the LTSSM.

In some embodiments, the memory 914 may store protocol data and link data for some of the hosts among the plurality of hosts 910. For example, the memory 914 may store the first protocol data and the first link data of the first host 911 and not store the protocol data and the link data of the n^{th} host 912.

When the switch 913 is connected to the first host 911, the switch 913 may receive second protocol data from the first host 911. The switch 913 may determine whether the first protocol data and the second protocol data match. When the first protocol data and the second protocol data match, the switch 913 may establish a link with the first host 911 by using the first link data. By using the first link data, the switch 913 may omit the recovery state of the link-up process, which may allow for rapid link establishment. When the first protocol data and the second protocol data do not match, the switch 913 may perform the link-up process without using the first link data. Because the switch 913 does not use the first link data, the switch 913 may enter the recovery state and perform an equalization operation and the like. When the switch 913 establishes a link by performing a new link-up process, the switch 913 may record the second protocol data of the first host 911 and the second link data of the established link in the memory 914.

The switch 913 may receive third protocol data from the N^{th} host 912 when connected to the N^{th} host 912. The switch 913 may read the data stored in the memory 914 and determine that the memory 914 does not store data matching the third protocol data. The switch 913 may perform a new link-up process with the N^{th} host 912. The switch 913 may establish a link with the N^{th} host 912, and record the third protocol data and third link data of the established link in the memory 914. In some embodiments, the switch 913 may record data to the memory 914 in an SLC manner.

The storage device 915 may be implemented with various types of storage devices, such as a Solid-State Drive (SSD), embedded Multimedia Card (eMMC), Universal Flash Storage (UFS), CF, SD, Micro-SD, Mini-SD, xD, or memory stick.

In an embodiment, when the storage device 915 is an SSD, the storage device 915 may be a device that conforms to the NVMe standard. When the storage device 915 is an embedded memory or an external memory, the storage device 915 may be a device that conforms to the UFS standard or the eMMC standard. The plurality of hosts 910 and the storage device 915 may each generate packets according to an adopted standard protocol and transmit the generated packet.

In some embodiments, the plurality of hosts 910, the switch 913, and the storage device 915 may use the PCIe interface protocol. The PCIe interface protocol provides a bidirectional connection. In some embodiments, the plurality of hosts 910, the switch 913, and the storage device 915 may use various interface protocols, such as SATA, SATAe, SA-SCSI (SAS), NVMe, AHCI, or MMC.

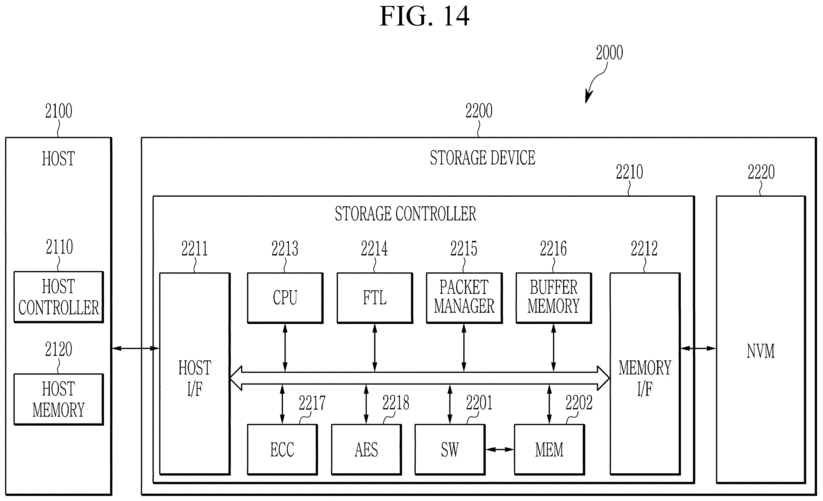

FIG. 14 is a block diagram illustrating a computing system according to an embodiment.

Referring now to FIG. 14, a computing system 2000 may be implemented with a PC, a data server, a laptop computer, an automotive electronics component, or a portable device. A portable device may be implemented with a mobile phone, a smartphone, a tablet PC, a wearable device, a PDA, an EDA, a digital still camera, a digital video camera, a PMP, a PND, a handheld game console, or an e-book. Additionally, the computing system 2000 may be implemented with a system on a chip (SoC).

The computing system 2000 may include a host 2100 and a storage device 2200. The host 2100 may communicate with the storage device 2200 through various interfaces. The host 2100 may request data processing operations, such as data read operations, data write (record, program) operations, and data erase operations, from the storage device 2200. For example, the host 2100 may be a CPU, GPU, microprocessor, AP, ECU, or the like.

The host 2100 may include a host controller 2110 and a host memory 2120. The host memory 2120 may function as a buffer memory for temporarily storing data to be transmitted to the storage device 2200 or data transmitted from the storage device 2200.

The storage device 2200 may include a storage controller 2210 and a non-volatile memory (NVM) 2220. The storage device 2200 may include storage media for storing data in response to the request from the host 2100. For example, the storage device 2200 may be implemented with a variety of types, such as an SSD, eMMC, UFS, CF, SD, Micro-SD, Mini-SD, xD, or memory stick.

When the storage device 2200 is an SSD, the storage device 2200 may be a device that conforms to the NVMe standard. When the storage device 2200 is an embedded memory or an external memory, the storage device 2200 may be a device that conforms to the UFS standard or the eMMC standard. The host 2100 and the storage device 2200 may each generate a packet according to an adopted standard protocol and transmit the generated packet.

When the non-volatile memory 2220 of the storage device 2200 includes a flash memory, the flash memory may include a 2D NAND memory array or a 3D NAND memory array. As another example, the storage device 2200 may include various other types of non-volatile memory. For example, various other types of memory, such as MRAM, STT-RAM, CBRAM, FRAM, PRAM, and RRAM, may be applied to the storage device 2200.

In some embodiments, the host controller 2110 and the host memory 2120 may be implemented on separate semiconductor chips. Alternatively, in some embodiments, the host controller 2110 and the host memory 2120 may be integrated on the same semiconductor chip. In one example, the host controller 2110 may be any one of a number of modules provided in an AP, and the AP may be implemented with an SoC. Additionally, the host memory 2120 may be an embedded memory provided within the AP, or may be a non-volatile memory or a memory module placed externally to the AP.

The host controller 2110 may manage the operation of storing data of a buffer region (for example, program data) in the non-volatile memory 2220, or storing data of the non-volatile memory 2220 (for example, read data) in the buffer region.

The storage controller 2210 may include a switch (SW) 2201, a memory (MEM) 2202, a host interface 2211, a memory interface 2212, and a CPU 2213. The storage controller 2210 may further include a flash translation layer (FTL) 2214, a packet manager 2215, a buffer memory 2216, an error correction code (ECC) engine 2217, and an advanced encryption standard (AES) engine 2218.

The storage controller 2210 may further include a working memory into which an FTL 2214 is loaded, and the execution of the FTL 2214 by the CPU 2213 may cause a data program operation and a read operation for the non-volatile memory to be controlled.

The contents for the switch 310 and the memory 320 described with reference to FIG. 1 are equally applicable to the switch 2201 and the memory 2202. That is, when the switch 2201 receives protocol data from the host 2100, the switch 2201 may determine whether the memory 2202 has stored data that matches the protocol data. When the memory 2202 stores the data that matches the protocol data, the switch 2201 may read link data corresponding to the protocol data from the memory 2202. The switch 2201 may perform the link-up process with the host 2100 by using the link data associated with the matching protocol data. When the memory 2202 does not store data that matches the protocol data, the switch 2201 may perform the link-up process without link data. When the switch 2201 establishes a link with the host 2100, the switch 2201 may record the link data in the memory 2202. In some embodiments, at least one of the switch 2201 and the memory 2202 may be implemented as being disposed outside of the storage controller 2210.

The host interface 2211 may transmit and receive the packet to and from the host 2100. The packet transmitted from the host 2100 to the host interface 2211 may include commands or data to be programmed into the non-volatile memory 2220, and the packet transmitted from the host interface 2211 to the host 2100 may include a response to the command or the data read from the non-volatile memory 2220.

The memory interface 2212 may transmit data to be programmed into the non-volatile memory 2220, or receive data read from the non-volatile memory 2220. The memory interface 2212 may be implemented to comply with standard protocols, such as Toggle or Open NAND Flash Interface (ONFI).

The FTL 2214 may perform various functions, such as address mapping, wear-leveling, and garbage collection. The address mapping operation is an operation of changing a logical address received from the host into a physical address that is used to actually store the data in the non-volatile memory 2220. The wear-leveling is a technique for ensuring that blocks within the non-volatile memory 2220 are used uniformly to prevent excessive degradation of a specific block, which may be implemented, for example, through firmware techniques that balance the erase counts of physical blocks. The garbage collection is a technique for securing available capacity within the non-volatile memory 2220 by copying valid data of a block into a new block and then erasing the old block.

The packet manager 2215 may generate a packet according to the protocol of the interface negotiated with the host 2100, or may parse various information from the packet received from the host 2100. Additionally, the buffer memory 2216 may temporarily store data to be programmed into the non-volatile memory 2220 or data to be read from the non-volatile memory 2220. The buffer memory 2216 may be configured to be within the storage controller 2210, but may also be disposed externally to the storage controller 2210.

The ECC engine 2217 may perform error detection and correction functions on read data that is read from the non-volatile memory 2220. More specifically, the ECC engine 2217 may generate parity bits for write data to be written to the non-volatile memory 2220, and the generated parity bits may be stored in the non-volatile memory 2220 along with the program data. When reading the data from non-volatile memory 2220, the ECC engine 2217 may correct errors in the read data by using the parity bits read from the non-volatile memory 2220 along with the read data, and output read data with the errors corrected.

The AES engine 2218 may perform at least one of an encryption operation and a decryption operation on the data input to the storage controller 2210 by using a symmetric-key algorithm.

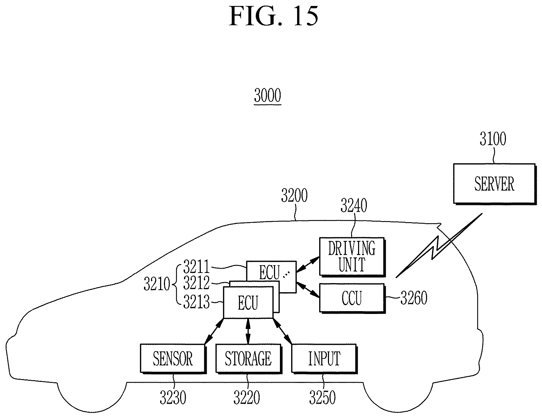

FIG. 15 is a block diagram illustrating a vehicle system according to an embodiment.

Referring to FIG. 15, a vehicle system 3000 according to an embodiment includes a server 3100 and a vehicle 3200. The server 3100 may communicate with the vehicle 3200. The vehicle 3200 may include a plurality of electronic control units (ECUs) 3210, and a storage device 3220. The vehicle 3200 may further include a sensor 3230, a driving unit 3240, an input unit 3250, and a connectivity control unit (CCU) 3260.

The plurality of electronic control units 3210 may include a first to the f^{th} electronic control units 3211 to 3213. Each of the plurality of electronic control units 3210 is electrically, mechanically, and communicatively connected to at least one device of the plurality of devices provided in the vehicle 3200, and may control the operation of the at least one device based on any one function performing command.

Here, the plurality of devices may include a storage device 3220, a sensor 3230, a driving unit 3240, an input unit 3250, a connectivity control unit 3260, and the like. The sensor 3230 may include an image sensor to acquire images required to perform at least one function, a temperature sensor to detect temperature inside or outside the vehicle, an environmental sensor to measure air quality, and the like. An image sensor may correspond to an automotive sensor that includes unit pixels.

The driving unit 3240 may include a fan and a compressor in an air conditioning device, a fan in a ventilation device, an engine and a motor in a power unit, a motor in a steering unit, a motor and valves in a braking unit, and an opening and closing device in a door or tailgate.

The plurality of electronic control units 3210 may communicate with the sensor 3230 and the driving unit 3240 by using, for example, at least one of Ethernet, Low Voltage Differential Signaling (LVDS) communication, Local Interconnect Network (LIN) communication, and Controller Area Network (CAN) communication.

The plurality of electronic control units 3210 may determine whether it is necessary to perform a function based on information obtained through the storage device 3220, and when it is determined that it is necessary to perform the function, the plurality of electronic control units 3210 controls the operation of the driving unit 3240 performing the corresponding function, but control the amount of operation based on the information obtained.

The storage device 3220 may be described in the same manner as described with reference to FIGS. 1 to 12. That is, the storage device 3220 may include a switch and a memory. The memory may store protocol data and link data. When the storage device 3220 is coupled to the plurality of electronic control units 3210, the storage device 3220 may receive protocol data from the plurality of electronic control units 3210. For example, the switch may receive first protocol data from a first electronic control unit 3211. When the memory stores the first protocol data, the switch may perform a link-up process with the first electronic control unit 3211 by using first link data corresponding to the first protocol data. When the memory does not store the first protocol data, the switch may perform a link-up process with the first electronic control unit 3211 and record second link data of the established link to the memory. In some embodiments, the switch and the memory may be disposed on the outside of the storage device 3220, as illustrated in FIG. 13.

The plurality of electronic control units 3210 may control the operation of the driving unit 3240 performing the corresponding function based on the function performing command input through the input unit 3250, and may also check a setting amount corresponding to the information input through the input unit 3250 and control the operation of the driving unit 3240 performing the corresponding function based on the checked setting amount.

Each of the plurality of electronic control units 3210 may control a function of any one device independently, or may control a function of any one device in conjunction with other electronic control units.

For example, when a distance to an obstacle detected by a distance detector is within a threshold distance, the electronic control unit of a collision avoidance device may cause a speaker to emit a warning sound for a collision with an obstacle.

In connection with an electronic control unit of a terminal for a vehicle, an electronic control unit of an image acquisition unit, and an electronic control unit of a collision avoidance device, an electronic control unit of an autonomous driving control unit may receive navigation information, road image information, and distance information from obstacles, and control a power device, a braking device, and a steering device by using the received information to perform autonomous driving.

A connectivity control unit (CCU) 3260 is electrically, mechanically, and communicatively connected to each of the plurality of electronic control units 3210 and communicates with each of the plurality of electronic control units 3210.

In this regard, the connectivity control unit 3260 may communicate directly with the plurality of electronic control units 3210 provided inside the vehicle, communicate with an external server, and communicate with an external terminal through an interface.

Here, the connectivity control unit 3260 may communicate with the plurality of electronic control units 3210 and may communicate with the server 3100 by using RF communication with one or more antennas.

Additionally, the connectivity control unit 3260 may communicate with the server 3100 through wireless communication. In this case, wireless communication between the connectivity control unit 3260 and the server 3100 may be accomplished through a variety of wireless communication methods, such as Wireless Fidelity (WiFi) modules and wireless broadband modules, as well as Global System for Mobile communication (GSM), Code Division Multiple Access (CDMA), Wideband Code Division Multiple Access (WCDMA), Universal Mobile Telecommunications System (UMTS), Time Division Multiple Access (TDMA), and Long Term Evolution (LTE).

In some embodiments, each component or combination of two or more components described with reference to FIGS. 1 to 15 may be implemented as a digital circuit, a programmable or non-programmable logic device or array, an Application Specific Integrated Circuit (ASIC), or the like.

## Claims

1. A storage device (300) comprising:
a memory (320) configured to store first protocol data (PTCL_DATA1) and first link data (LINK_DATA1) corresponding to a first host (100); and
a switch (310) connected to the memory (320), and configured to:
read the first protocol data (PTCL_DATA1) from the memory (320) based on second protocol data (PTCL_DATA2) being received from the first host (100), and
perform a link-up process with the first host (100) by using the first link data (LINK_DATA1) based on the first protocol data (PTCL_DATA1) matching the second protocol data (PTCL_DATA2).

2. The storage device (300) of claim 1, wherein the switch (310) is further configured to determine whether the first protocol data (PTCL_DATA1) is stored in the memory (320) based on the second protocol data (PTCL_DATA2) being received from the first host (100), and compare the second protocol data (PTCL_DATA2) with the first protocol data (PTCL_DATA1) based on determining the first protocol data (PTCL_DATA1) is stored in the memory (320).

3. The storage device (300) of claim 1 or 2, wherein the first link data (LINK_DATA1) indicates a preset value set in a previous link-up process, and
wherein the switch (310) is further configured to perform the link-up process by using the preset value.

4. The storage device (300) of claim 3, wherein the first link data (LINK_DATA1) indicates a reference order of states of the link-up process, and
wherein the switch (310) is further configured to determine whether an order of states executed in the link-up process matches the reference order.

5. The storage device (300) of claim 4, wherein the switch (310) is further configured to re-execute the link-up process while performing the link-up process based on the order of states not matching the reference order.

6. The storage device (300) of any one of claims 1 to 5, wherein the switch (310) is further configured to:
transmit an identification signal to the first host (100),
based on third protocol data being received from the first host (100) in response to the identification signal, determine whether the first protocol data (PTCL_DATA1) and the third protocol data match, and
based on determining the first protocol data (PTCL_DATA1) and the third protocol data do not match, re-execute the link-up process.

7. The storage device (300) of any one of claims 1 to 6, wherein the switch (310) is further configured to, based on a link being re-established with the first host (100), obtain second link data (LINK_DATA2) and record the second link data (LINK_DATA2) in the memory (320).

8. The storage device (300) of any one of claims 1 to 6, wherein the switch (310) is further configured to:
based on the first protocol data (PTCL_DATA1) and the second protocol data (PTCL_DATA2) not matching, perform the link-up process without the first link data (LINK_DATA1), and
based on link-up with the first host (100) being completed, store second link data (LINK_DATA2) and the second protocol data (PTCL_DATA2) of the established link in the memory (320).

9. The storage device (300) of claim 8, wherein the switch (310) is further configured to store the second link data (LINK_DATA2) and the second protocol data (PTCL_DATA2) in the memory (320) in a Single Level Cell, SLC, manner.

10. The storage device (300) of any one of claims 1 to 6, wherein the memory (320) is further configured to store third protocol data and second link data (LINK_DATA2) corresponding to a second host (200), and
wherein the switch (310) is further configured to perform a link-up process with the second host (200) based on the third protocol data and the second link data (LINK_DATA2).

11. The storage device (300) of claim 10, wherein the switch (310) is further configured to, based on fourth protocol data being received from the second host (200), read the third protocol data from the memory (320), and based on the third protocol data matching the fourth protocol data, read the second link data (LINK_DATA2) and perform a link-up process with the second host (200) by using the second link data (LINK_DATA2).

12. The storage device (300) of any one of claims 1 to 11, further comprising:
a controller (830) configured to control a data operation based on a request from the first host (100); and
a non-volatile memory (820) configured to store, erase, or output data based on a control of the controller 830.

13. The storage device (300) of claim 12, wherein the switch (310) is further configured to, when link-up with the first host (100) is completed, transmit a command of the first host (100) to the controller (830), and
wherein the controller (830) is further configured to control the non-volatile memory (820, 850) based on the command.

14. An electronic system (90) comprising:
a plurality of hosts (910);
a memory (914) configured to store link data corresponding to at least one host of the plurality of hosts (910);
a switch (913) configured to establish a link with the at least one host based on the link data, and receive a command and data from the at least one host while the link is established; and
a storage device (915) configured to perform a data operation based on the command and the data.

15. The electronic system (90) of claim 14, wherein the switch (913) is further configured to perform a link-up process with a first host (911) of the plurality of hosts (910) based on the link data not comprising link data of the first host (911), and, based on a link with the first host (100) being established, store first link data (LINK_DATA1) of the established link in the memory (914).
